(19) Europäisches Patentamt
European Patent Office
Office européen des brevets

(11) EP 0 414 113 B1

(12) **EUROPÄISCHE PATENTSCHRIFT**

(45) Veröffentlichungstag und Bekanntmachung des Hinweises auf die Patenterteilung:
**29.05.1996 Patentblatt 1996/22**

(51) Int Cl.$^6$: **H04N 7/32**, G06F 15/00

(21) Anmeldenummer: **90115629.9**

(22) Anmeldetag: **16.08.1990**

(54) **Verfahren zur Bewegungskompensation in einem Bewegtbildcoder oder -decoder**

Method for movement compensation in a moving-image encoder or decoder

Procédé pour la compensation de mouvement dans un codeur ou un décodeur des images mouvantes

(84) Benannte Vertragsstaaten:
**AT BE CH DE DK ES FR GB GR IT LI LU NL SE**

(30) Priorität: **24.08.1989 DE 3927937**
**12.03.1990 DE 4007851**

(43) Veröffentlichungstag der Anmeldung:
**27.02.1991 Patentblatt 1991/09**

(73) Patentinhaber: **DEUTSCHE THOMSON-BRANDT GMBH**
**D-78048 Villingen-Schwenningen (DE)**

(72) Erfinder:
- **Herpel, Carsten, Dipl.-Ing.**
  **D-3000 Hannover (DE)**
- **Hepper, Dietmar, Dipl.-Ing.**
  **D-3000 Hannover 1 (DE)**

(74) Vertreter: **Hartnack, Wolfgang, Dipl.-Ing.**
**Deutsche Thomson-Brandt GmbH**
**Patentabteilung**
**Göttinger Chaussee 76**
**30453 Hannover (DE)**

(56) Entgegenhaltungen:
- **SIGNAL PROCESSING Bd. 15, Nr. 3, Oktober 1988, AMSTERDAM, NL Seiten 315 - 334; MICHAEL HÖTTER ET AL: 'Image Segmentation Based on Object Oriented Mapping Parameter Estimation'**
- **PATENT ABSTRACTS OF JAPAN vol. 014, no. 437 (E-0980)19. September 1990 & JP-A-02 171 093 (NEC CORP)**
- **PATENT ABSTRACTS OF JAPAN vol. 009, no. 332 (E-370)26. Dezember 1985 & JP-A-60 163 594 (HITACHI SEISAKUSHO KK)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 414 113 B1

## Beschreibung

Die Erfindung betrifft ein Verfahren zur Bewegungkompensation in einem Bewegtbildcoder oder -decoder, mit Erkennung und Kompensation von Zoom und Pan, gemäß der Präambel des Anspruchs 1.

Heutige Bewegtbildcoder verwenden als einen Schritt der Datenreduktion in der Regel eine bewegungskompensierende Prädiktion; dazu werden Vektoren, die eine translatorische Bewegung beschreiben, meist blockweise - z. B. mittels log(D)-step search oder full search - ermittelt. Die Datenreduktion und damit die Bildqualität eines solchen Coders kann durch Erkennung und Kompensation der in Fernsehszenen häufigen Bewegungsarten Zoom und Pan zusätzlich verbessert werden.

In "M. Hötter; R. Thoma: Image Segmentation Based on Object Oriented Mapping Parameter Estimation, Universität Hannover, 1988" ist ein Verfahren zur Bildregulierung unter gleichzeitiger Schätzung des Bewegungsparameters der einzelnen Segmente beschrieben. In "M. Hötter: Estimation of the Global Motion Parameters Zoom and Pan", Tagungsband des Picture Coding Symposium, Stockholm, Schweden, 1987, wird mittels direkter Verwendung der Bildinformation zweier Bilder der Zoom-Faktor ermittelt.

Der Erfindung liegt die Aufgabe zugrunde, ein Verfahren zur Bewegungskomensation in einem Bewegtbildcoder oder -decoder anzugeben, unter Auswertung der Zoom- und Pan-Informationen einer Bildregulanz.

Diese Aufgabe wird durch die in Anspruch 1 angegebenen Merkmale gelöst. Vorteilhafte Weiterbildungen sind in den abhängigen Ansprüchen angegeben.

Da ein Bewegtbildcoder wie der erwähnte bereits über einen Bewegungsschätzer für translatorische Verschiebungen verfügt, werden erfindungsgemäßgemäß diesen Verschiebungsvektoren weiterverwertet, um die Zoom- und Pan-Informationen zu extrahieren.

Dazu werden aus einem Verschiebungsvektorfeld Zoom und Pan geschätzt.

Die Verschiebungsvektoren werden zunächst daraufhin analysiert, ob

a) ein Pan, aber kein Zoom oder
b) ein einem Zoom überlagerter Pan vorliegen könnte.

Nach erfolgter Panschätzung und -kompensation wird die Hypothese eines vorliegenden Zooms geprüft. Falls ein hinreichend zuverlässiger Zoomfaktor ermittelt werden kann, wird dann ein entsprechendes Zoomvektorfeld generiert und mit dem vorermittelten Verschiebungsvektorfeld verglichen. Erfindungsgemäß kann in nachfolgenden Iterationsschritten ein falsch erkannter Panvektor und ggf. die Größe des Zoomfaktors korrigiert werden.

Im folgenden wird der Ausgangspunkt der Zoom- und Panschätzung betrachtet.

Ein Fernsehbild wird im folgenden beispielsweise als eine zweidimensionale Matrix von Bildpunkten mit entsprechenden Grauwerten s(x,y) betrachtet.

Der obige Bewegungsschätzer liefert eine Matrix V(x,y) = (Vx(x,y), Vy(x,y)) von Verschiebungsvektoren, wobei z. B. jeweils ein Vektor einem 16x16 Bildpunkte großen Block des Bildsignals s(x,y) zugewiesen ist. Zur Vereinfachung sei V als eine Matrix derselben Größe wie die Bildsignalmatrix s gedacht, bei der dann jeweils für je z. B. 16x16 Positionen derselbe Vektor eingetragen wird. Die Koordinaten (x,y) sind so gewählt, daß der Ursprung (0,0) in der Bildmitte liegt und für den Zahlenbereich von x und y gilt: -X < x < +X und -Y < y < +Y.

Vorverarbeitung der Eingangsdaten geschieht durch Vektorfeldbereinigung und Aufnahme des Vektorhistogramms.

Aus dem Vektorfeld V können Vektoren, die grob aus einem sonst homogenen Feld herausfallen, durch eine medianähnliche Vorfilterung eliminiert werden.

Dazu wird vektor- und damit blockweise in einem 3x3 großen Fenster um jeden Eintrag (xb,yb) in den Matrizen Vx, Vy der Median der Vektorkomponenten Vmx(xb,yb), Vmy(xb,yb) ermittelt. Die Koordinatenbezeichnungen (xb,yb) bringen zum Ausdruck, daß diese Berechnung nicht für jeden Bildpunkt, sondern für jeden Block durchgeführt werden muß. Wenn ein Vektor um nicht mehr als einen vorgebbaren Faktor von dem Medianwert abweicht, d. h., wenn gilt:

$$\frac{1}{Fm} \le \frac{Vx(xb,yb)}{Vmx(xb,yb)} \le Fm \text{ ODER } \frac{1}{Fm} \le \frac{Vy(xb,yb)}{Vmy(xb,yb)} \le Fm$$

mit geeignet gewähltem Fm, z. B. Fm=2, so wird der Vektor V(xb,yb) als zuverlässig betrachtet; andernfalls wird er als Ausreißer angesehen und bei der folgenden Analyse nicht weiter berücksichtigt.

Es wird das Histogramm H(Vx(x,y),Vy(x,y)) der verbleibenden K Bewegungsvektoren Vk=(Vx(xk,yk),Vy (xk,yk)) mit k=1...K ermittelt. Die ausführliche Schreibweise H(Vx(x,y),Vy(x,y)) wird zwecks Übersichtlichkeit im folgenden z.

T. abgekürzt zu H(Vx,Vy), bzw. H(V), falls die Abhängigkeit der Vektorkomponenten vom Ort bzw. die Zweidimensionalität des Histogramms gerade nicht wesentlich ist.

Die Panerkennung mittels Vektorhistogramm geschieht folgendermaßen:

Zunächst wird in einer ersten Hypothese angenommen, daß ein Pan vorliegt und der häufigste Vektor der Panvektor ist:

1. Hypothese: Der häufigste Vektor Vp = (Vpx,Vpy) mit H(Vpx,Vpy) = Hmax stellt den eindeutigen Panvektor dar.

Nun wird geprüft, ob die erste Hypothese zutrifft. Dazu muß die Häufigkeit des Panvektors eine vorgegebene Schwelle Hpmin überschreiten, und die Häufigkeiten der übrigen Vektoren eine andere Schwelle $\delta$ unterschreiten:

Test: Wenn der häufigste Vektor Vp = (Vpx,Vpy) mit einer Häufigkeit

$$H(Vpx,Vpy) = Hmax > Hpmin$$

existiert UND

$$H(Vx,Vy) < \delta$$

für alle anderen Vektoren ist, genau dann liegt ein Pan vor (Bsp: Hpmin=0.5, $\delta$=0.1).

Falls auf diese Weise kein Pan erkannt wird, so wird eine zweite Annahme (2. Hypothese) gemacht:

2. Hypothese: Der wahre Panvektor liegt zwischen den vier benachbarten Vektoren, die zusammen die größte Häufigkeit HMax haben.

Die Anordnung der Vektorpositionen in einem Quadrat kann wie in der Figur 1 aussehen:

Wobei * die benachbarten Vektoren und o der geschätzte wahre Panvektor ist.

Diese Annahme wird ebenfalls geprüft:

Test: Wenn für diejenigen vier Vektoren V1, ... V4, deren Endpunkte ein Quadrat mit der Kantenlänge 1 bilden und die die größte gemeinsame Häufigkeit HSumMax haben, gilt:

$$HSumMax > Hpmin$$

UND

$$H(Vx,Vy) < \delta$$

für alle anderen Vektoren, genau dann liegt ein Pan vor. Der Panvektor o wird dann geschätzt als:

$$Vp = (Vpx,Vpy)$$

mit

$$Vpx = \sum_{i=1}^{4} H(Vi)*Vix$$

$$Vpy = \sum_{i=1}^{4} H(Vi)*Viy$$

Falls auf diese Weise kein Pan erkannt wird, so wird als dritte Hypothese vermutet, daß ein Zoom vorliegt:

3. Hypothese: Es liegt ein Zoom vor.

Ein dem Zoom überlagerter Pan kann aus dem Histogramm nur noch durch komponentenweise lineare Regression ermittelt werden. Hierzu werden alle Vektoren, die im Histogramm, die in diesem Zusammenhang eine zwei dimensionale Matrix darstellt, außerhalb eines Rechtecks liegen, das z. B. 90 % aller Vektoren enthält, als "Ausreißer" eingestuft und für die weitere Auswertung nicht berücksichtigt. Die Koordinaten (xi,yi), mit i = 1 ... I bezeichnen im weiteren die Positionen in der Vektorfeldmatrix V, für die ein gültiger Vektor vorliegt. Dabei wird pro Bildblock nur ein Vektor ausgewertet.

Aus den ermittelten Regressionsgeraden

$$Vx(x) = ax * x + bx$$
$$Vy(y) = ay * y + by$$

folgen die Panschätzwerte gemäß

$$Vpx = Vx(0)$$
$$Vpy = Vy(0).$$

Diese Schätzwerte werden bei der Zoomerkennung benutzt.

Die Zoomerkennung erfolgt aus dem Vektorfeld.

Zoom bedeutet eine subjektive Verkleinerung oder Vergrößerung von Bildinhalten durch eine Streckung oder Stauchung der Bildebene. Die Stärke oder Geschwindigkeit des Zooms, der "Zoomfaktor", ist identisch mit dem Streckfaktor a = (ax,ay) einer zentrischen Streckung der Bildebene. Im Fall gleicher horizontaler und vertikaler Bildpunktabmessungen sind die horizontale und die vertikale Streckung gleich groß: ax = ay = a. Dieser Fall wird im folgenden als

Beispiel weiter betrachtet. Die Streckung der Bildebene ist dann definiert durch:

$$sn+1(x,y) = sn(x',y') = sn(a*x,a*y) \quad (1)$$

mit sn: Originalsignal,
sn+1: Signal nach Streckung.

Nach erfolgter Pankompensation liegt das Streck- oder Zoomzentrum in der Bildmitte. Die ermittelten Bewegungsvektoren V(x,y) stellen im Idealfall die Differenz zwischen den Koordinaten ein und desselben Signalabschnitts (Blokkes) in den Bildern n und n+1 dar:

$$Vx(x,y) = x - x' = x - a*x = (1-a)x = Z*x$$
$$Vy(x,y) = y - y' = y - a*y = (1-a)y = Z*y \quad (2)$$

Der hier bestimmte Zoomfaktor Z = Zx = Zy erlaubt es somit, ein Bewegungsvektorfeld zu ermitteln, das dann wiederum dazu benutzt werden kann, aus Bild n das Bild n+1 zu prädizieren gemäß:

$$sn+1\ (x,y) = sn\ (x-Vx(x,y),\ y-Vy(x,y)) \quad (3)$$

für alle x, y.

Die Schätzung des Zoomfaktors erfolgt zunächst lokal an den Positionen (xi,yi) der gültigen Bewegungsvektoren, getrennt nach Komponenten:

$$Zxi = Vx(xi,yi) / xi$$
$$Zyi = Vy(xi,yi) / yi \quad (4)$$

Hierbei werden zur Schätzung nur Vektoren herangezogen, die annähernd radial zum Zoomzentrum verlaufen (z. B. ± 10°).

Der globale Zoomfaktor Z wird dann gesetzt zu

$$Z = Wx*Zx + Wy*Zy \quad (5)$$

mit

$$Zx = (\sum_i Zxi) / I$$

$$Zy = (\sum_i Zyi) / I$$

wobei Wx, Wy Gewichtsfaktoren sind, die die Zuverlässigkeit der Schätzwerte Zx , Zy darstellen und ermittelt werden als:

$$Wx = \frac{Sy'}{Sx' + Sy'} \quad (6)$$

und

$$Wy = 1 - Wx$$

mit

$$Sx' = Sx / |Zx|$$
$$Sy' = Sy / |Zy| \quad (7)$$

wobei

$$Sx = sqrt\ ((\sum_i (Zxi-Zx)**2) / (I-1))$$
$$Sy = sqrt\ ((\sum_i (Zyi-Zy)**2) / (I-1)) \quad (8)$$

d. h., Sx', Sy' sind die normierten Standardabweichungen der Schätzwerte Zx, Zy.

Diese Zoomhypothese wird geprüft:

Test: Als Testparameter für die Zuverlässigkeit des Zoomfaktors dienen die Differenz der Zoomfaktorschätzwerte in x-und y-Richtung

$$dZ = |Zx-Zy| / |Z|, \quad (9)$$

sowie die normierte Standardabweichung

$$S' = (Sx'+Sy')/2, \quad (10)$$

die Differenz der Standardabweichungen in x- und y-Richtung

$$dS = |Sx-Sy| / |Zx+Zy|, \quad (11)$$

und die Anzahl gültiger Testvektoren I. Wenn diese Größen gewisse Schwellen nicht überschreiten sowie eine Anzahl

von gültigen Testvektoren I mindestens vorhanden sind, so wird ein Zoom als zuverlässig erkannt angesehen. Mögliche Schwellwerte sind:

$dZ < 0.3$
$S' < 1.0$
$dS < 1.0$
$I > 0.2 * N$

mit N = Anzahl der vorgegebenen Vektoren.

Nach Schätzung eines Zoomfaktors kann zur Verbesserung des Zoomfaktors als auch des geschätzten Panfaktors eine iterative Überprüfung des Ergebnisses der Zoom- und Pananalyse durchgeführt werden.

Falls ein Zoom vorliegt, wird nun überprüft, ob im zoomkompensierten Vektorfeld ein Pananteil vorhanden ist.

Test: Bei Vorliegen eines Zooms wird ein Zoomvektorfeld gemäß Gleichung (2) synthetisiert und das Differenzvektorfeld zu den vorgegebenen Vektoren gebildet. Das Differenzvektorhistogramm wird aufgenommen und auf Vorhandensein eines nichtkompensierten Pananteils überprüft gemäß der o. a. Panerkennung.

Falls dabei ein Pan erkannt wird, erfolgt iterative Wiederholung der o. a. Zoom- und Panerkennung.

Abbruchbedingungen für die Iteration sind:

- kein Pananteil mehr im Differenzvektorfeld vorhanden
- Standardabweichung des ermittelten neuen Zoomfaktors höher als bei letzter Iteration.
- Festsetzung der maximalen Anzahl Iterationen, z. B. auf 4.

Aus den Parametern Vp = (Vpx,Vpy) und Z wird nun ein Vektorfeld gemäß Gleichung (3) so berechnet, daß je Bildpunkt ein Vektor vorliegt, mit

$$V(x,y) = (Vx(x,y),Vy(x,y)) = (Z*x+Vpx,\ Z*y+Vpy) \qquad (12)$$

für alle x, y.

Die bewegungskompensierte Prädiktion mit Zoom- und Pankompensation von Bild n+1 aus Bild n erfolgt nun gemäß Gleichung (3).

**Patentansprüche**

1. Verfahren zur Bewegungskompensation in einem Bewegtbildcoder oder -decoder zur Erkennung und Kompensation von Zoom und Pan, **gekennzeichnet durch:**

   a) aus den Daten eines blockorientierten Bewegungsschätzers wird für die Ermittlung des Panvektors und des Zoomfaktors aus den Block-Bewegungsvektoren ein Vektorhistogramm (H) erzeugt, welches auf einem homogenisierten Vektorfeld beruht;
   b) wenn der häufigste Vektor (Vp) im Vektorhistogramm eine vorgegebene erste Häufigkeits-Schwelle (Hpmin) überschreitet und die übrigen Vektoren im Vektorhistogramm eine vorgegebene zweite Häufigkeits-Schwelle ($\delta$) unterschreiten, wird dieser häufigste Vektor als Panvektor angesehen;
   c) falls kein Panvektor ermittelt werden kann, wird ein Zoom angenommen, wobei zunächst mögliche, dem Zoom überlagerte Panvektor-Komponenten-Schätzwerte (Vpx, Vpy) mittels linearer Regression aus dem Vektorhistogramm ermittelt und für eine Pankompensation verwendet werden;
   d) nachfolgend wird von aufeinanderfolgenden Bildern aus dem Vektorfeld ein Zoomfaktor unter Verwendung der Panvektor-Schätzwerte zur Pankompensation ermittelt;
   e) durch Vergleich der so ermittelten Zoomfaktor-Komponenten wird der ermittelte Zoomfaktor überprüft.

2. Verfahren nach Anspruch 1, **dadurch gekennzeichnet,** daß zur Vektorfeld-Homogenisierung eine Vorfilterung der Vektorkomponenten (Vx, Vy) erfolgt.

3. Verfahren nach Anspruch 2, **dadurch gekennzeichnet,** daß die Vorfilterung mittels eines laufenden Fensters über die Vektorkomponenten (Vx, Vy) an den Blockpositionen erfolgt, wobei Vektoren, die um mehr als einen vorgebbaren Faktor von dem entsprechenden Fenster-Komponentenmedianwert abweichen, nicht weiter berücksichtigt werden.

4. Verfahren nach einem der Ansprüche 1 bis 3, **dadurch gekennzeichnet,** daß zwischen den Schritten b) und c)

geprüft wird, ob die gemeinsame Häufigkeit (HSumMax) von vier im Blockraster in Form eines Quadrats (Fig. 1) benachbarten Vektoren die erste Häufigkeits-Schwelle (Hpmin) überschreitet und die übrigen Vektoren im Vektorhistogramm die zweite Häufigkeits-Schwelle ( δ) unterschreiten, wobei im zutreffenden Fall jeweils die Komponenten der vier Vektoren kombiniert werden und der Vektor aus den beiden resultierenden Komponenten als Panvektor angesehen wird.

5. Verfahren nach einem oder mehreren der Ansprüche 1 bis 4, **dadurch gekennzeichnet,** daß zur Ermittlung des Zoomfaktors komponentenweise Mittelwerte aus lokalen Schätzungen gemäß der Vorschrift 'Vektorkomponente dividiert durch die Position des Vektors' gebildet werden, wobei aus den Streuungen dieser lokalen Schätzungen ein Gewichtungsfaktor für jede Komponente ermittelt wird und die Mittelwerte entsprechend gewichtet aufaddiert werden zur Bildung des Zoomfaktors.

6. Verfahren nach Anspruch 5, **dadurch gekennzeichnet,** daß zur Ermittlung des Zoomfaktors nur solche Vektoren herangezogen werden, die annähernd radial zum Zoomzentrum verlaufen.

7. Verfahren nach Anspruch 5 oder 6, **dadurch gekennzeichnet,** daß die komponentenweise Mittelwertbildung durch separate Addition der x- und y-Komponenten der Vektoren des Vektorhistogramm gewichtet nach ihrer Häufigkeit erfolgt.

8. Verfahren nach einem der Ansprüche 5 bis 7, **dadurch gekennzeichnet,** daß ein Differenzvektorfeld aus dem Vektorfeld und einem synthetischem Vektorfeld ermittelt wird, wobei dieses synthetische Vektorfeld mittels der Parameter des Zoomfaktors gemäß der Vorschrift 'Vektorkomponente gleich Zoomfaktor multipliziert mit der Position des Vektors' ermittelt wird, daß aus dem Differenzvektorfeld ein Pan geschätzt wird und im Falle eines vorhandenen Panvektors ungleich Null die Zoomfaktor-Ermittlung mit korrigierter Panschätzung wiederholt wird.

## Claims

1. A process for movement compensation in a moving image coder or decoder for the recognition and compensation of zoom and pan, characterised in that:

   a) from the data of a block-oriented movement estimator, for the calculation of the pan vector and the zoom factor a vector histogram (H) based on a homogenised vector field is generated from the block movement vectors;
   b) if the most frequent vector (Vp) in the vector histogram overshoots a predetermined, first frequency threshold (Hpmin) and the other vectors in the vector histogram undershoot a predetermined, second frequency threshold (δ), this most frequent vector is considered as pan vector;
   c) if no pan vector can be calculated, a zoom is assumed, where initially, possible pan vector component estimate values (Vpx, Vpy) superimposed upon the zoom are calculated from the vector histogram by means of linear regression and are used for a pan compensation;
   d) then, from following images, a zoom factor is calculated from the vector field using the pan vector estimate values for the pan compensation;
   e) the calculated zoom factor is checked by comparison of the zoom factor components thus calculated.

2. A process as claimed in Claim 1, characterised in that for the vector field homogenisation a pre-filtering of the vector components (Vx, Vy) is carried out.

3. A process as claimed in Claim 2, characterised in that the pre-filtering is carried out by means of a moving window via the vector components (Vx, Vy) at the block positions, where vectors which differ from the corresponding window component median value by more than a predeterminable factor are no longer taken into consideration.

4. A process as claimed in one of Claims 1 to 3, characterised in that between steps b) and c) it is checked whether the common frequency (HSumMax) of four vectors, which latter are adjacent in the block matrix in the form of a square (Fig. 1), overshoots the first frequency threshold (Hpmin) and the other vectors in the vector histogram undershoot the second frequency threshold (δ), and where applicable the components of the four vectors are in each case combined and the vector of the two resultant components is considered as pan vector.

5. A process as claimed in one or several of Claims 1 to 4, characterised in that for the calculation of the zoom factor,

component-wise mean values of local estimations are formed in accordance with the rule "vector component divided by the position of the vector", whereby from the deviations of these local estimations a weighting factor is calculated for each component and the mean values, correspondingly weighted, are added to form the zoom factor.

**6.** A process as claimed in Claim 5, characterised in that only those vectors which extend approximately radially of the zoom centre are used to calculate the zoom factor.

**7.** A process as claimed in Claim 5 or 6, characterised in that the component-wise mean value formation is carried out by separate addition of the x- and y-components of the vectors of the vector histogram, weighted in accordance with their frequency.

**8.** A process as claimed in one of Claims 5 to 7, characterised in that a difference vector field is calculated from the vector field and a synthetic vector field, where this synthetic vector field is calculated by means of the parameters of the zoom factor in accordance with the rule "vector component equal to zoom factor multiplied by the position of the vector", that from the difference vector field a pan is estimated and in the event that a pan vector unequal to zero is present, the zoom factor calculation is repeated with corrected pan estimation.

**Revendications**

**1.** Procédé pour la compensation de mouvement dans un codeur ou un décodeur d'images mouvantes pour la détection et la compensation de zoom et pan, **caractérisé en ce qui suit:**

a) pour la détermination du vecteur de pan et du facteur de zoom à partir des vecteurs de mouvement de blocs, un histogramme vectoriel (H) reposant sur un champ vectoriel homogénéisé, est généré à l'aide des données fournies par un estimateur de mouvement opérant par blocs ;
b) lorsque le vecteur le plus fréquent (Vp) dudit histogramme vectoriel dépasse un premier seuil de fréquence défini (Hpmin) et que tous les autres vecteurs compris dans l'histogramme vectoriel restent au-dessous d'un second seuil de fréquence défini (δ), ledit vecteur le plus fréquent sera considéré comme étant le vecteur de pan ;
c) s'il est impossible de déterminer un vecteur de pan, on supposera la présence d'un zoom, sachant que les éventuelles valeurs estimées des composantes du vecteur de pan (Vpx, Vpy) superposées au zoom, sont d'abord extraites de l'histogramme vectoriel à l'aide d'un régression linéaire, puis utilisées pour une compensation de pan ;
d) à partir du champ vectoriel et en utilisant les valeurs estimées du vecteur de pan pour la compensation du pan, on détermine ensuite un facteur de zoom d'images successives ;
e) la vérification du facteur de zoom calculé est réalisée par comparaison des composantes du facteur de zoom déterminées de cette manière ;

**2.** Procédé selon la revendication 1 **caractérisé en ce que** l'homogénéisation du champ vectoriel est obtenue grâce à un préfiltrage des composantes vectorielles (Vx, Vy).

**3.** Procédé selon la revendication 2 **caractérisé en ce que** ledit préfiltrage est effectué au niveau des positions des blocs par l'intermédiaire des composantes vectorielles (Vx, Vy) à l'aide d'une fenêtre courante, sachant que les vecteurs s'écartant de la médiane des composantes de la fenêtre d'une valeur supérieure à un facteur donné, ne seront plus pris en compte par la suite.

**4.** Procédé selon l'une quelconque des revendications 1 à 3 **caractérisé en ce** qu'une vérification est effectuée entre les pas b) et c) pour constater si la fréquence cumulée (HSumMax) de quatre vecteurs adjacents dans une grille de blocs en forme de carré (fig. 1) dépasse le premier seuil de fréquence (Hpmin) et si les autres vecteurs compris dans l'histogramme vectoriel restent au-dessous du second seuil de fréquence (δ), sachant que, si ce cas se présente, les composantes des quatre vecteurs sont combinées et le vecteur obtenu à partir des deux composantes résultantes est considéré comme étant le vecteur de pan.

**5.** Procédé selon l'une quelconque ou plusieurs des revendications 1 à 4 **caractérisé en ce** que, pour déterminer le facteur de zoom, on forme des médianes composante par composante à partir d'estimations locales selon la règle "composante vectorielle divisée par la position du vecteur", et que les dispersions de ces estimations locales servent à calculer un facteur de pondération pour chaque composante, et enfin, que les médianes pondérées en

conséquence sont alors additionnées pour obtenir le facteur de zoom.

6. Procédé selon la revendication 5 **caractérisé en ce** que la détermination du facteur de zoom n'est effectuée qu'à l'aide des vecteurs qui s'étendent dans un sens approximativement radial vers le centre du zoom.

7. Procédé selon l'une quelconque des revendications 5 ou 6 **caractérisé en ce** que les médianes par composantes sont formées par addition séparée des composantes x et y des vecteurs de l'histogramme vectoriel, et ce d'une manière pondérée en fonction de leur fréquence.

8. Procédé selon l'une quelconque des revendications 5 à 7 **caractérisé en ce** qu'un champ vectoriel différentiel est déterminé à partir du champ vectoriel et d'un champ vectoriel synthétique, sachant que ledit champ vectoriel synthétique est défini à l'aide des paramètres du facteur de zoom selon la règle "composante vectorielle égale au facteur de zoom, multipliée avec la position du vecteur", caractérisé en outre en ce qu'un pan est estimé à partir du champ vectoriel différentiel, et qu'en présence d'un vecteur de pan inégal à zéro, la détermination du facteur de zoom est répétée avec une estimation de pan corrigée.

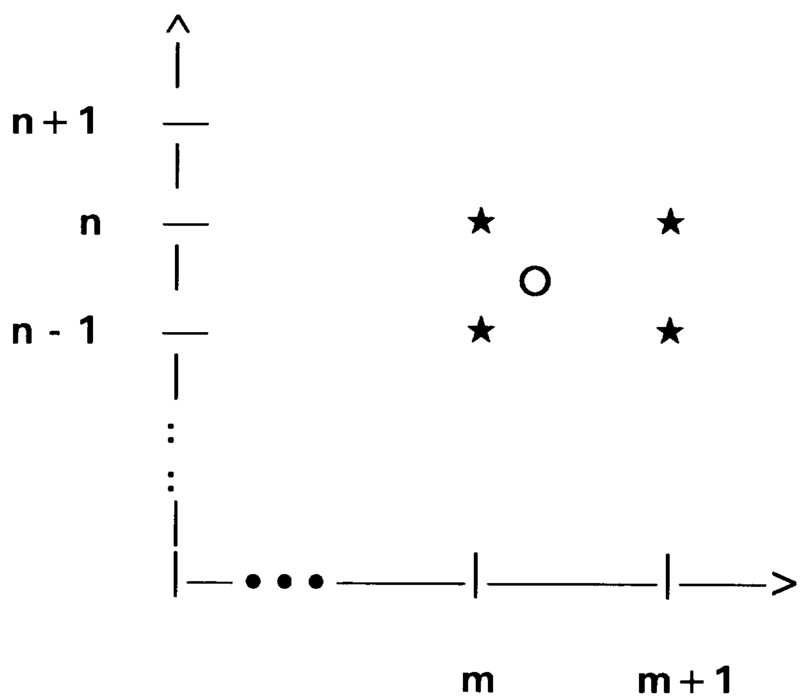


Fig. 1